(19) **Europäisches Patentamt / European Patent Office / Office européen des brevets**

(11) **EP 1 735 089 B1**

(12) **EUROPEAN PATENT SPECIFICATION**

(45) Date of publication and mention
of the grant of the patent:
**28.11.2018 Bulletin 2018/48**

(51) Int Cl.:
*C02F 1/28* (2006.01)   *C10G 25/00* (2006.01)
*B01D 15/00* (2006.01)   *B01J 20/14* (2006.01)
*B01J 20/32* (2006.01)   *C02F 101/20* (2006.01)

(21) Application number: **05725625.7**

(22) Date of filing: **14.03.2005**

(86) International application number:
**PCT/US2005/008580**

(87) International publication number:
**WO 2005/089931 (29.09.2005 Gazette 2005/39)**

(54) **METHOD OF SEPARATING MERCURY FROM FLUIDS**

VERFAHREN ZUM ABTRENNEN VON QUECKSILBER AUS FLÜSSIGKEITEN

PROCÉDÉ DE SÉPARATION DU MERCURE DE FLUIDES

(84) Designated Contracting States:
**AT BE BG CH CY CZ DE DK EE ES FI FR GB GR HU IE IS IT LI LT LU MC NL PL PT RO SE SI SK TR**

(30) Priority: **17.03.2004 US 803736**

(43) Date of publication of application:
**27.12.2006 Bulletin 2006/52**

(73) Proprietor: **Advanced Minerals Corporation**
**San Jose**
**California 95112 (US)**

(72) Inventor: **WANG, Bo**
**Lompoc, California 93436 (US)**

(74) Representative: **Haseltine Lake LLP**
**Redcliff Quay**
**120 Redcliff Street**
**Bristol BS1 6HU (GB)**

(56) References cited:
WO-A1-01/62870    GB-A- 1 043 616
GB-A- 1 503 315    GB-A- 2 151 599
GB-A- 2 387 391    US-A- 3 745 206
US-A- 3 859 210    US-A- 4 604 321
US-A- 5 814 226    US-B1- 6 326 326

- DATABASE WPI Section Ch, Week 198125 Derwent Publications Ltd., London, GB; Class C03, AN 1981-45231D XP002348599 & JP 56 049786 A (AGENCY OF IND SCI & TECHNOLOGY) 6 May 1981 (1981-05-06)
- PATENT ABSTRACTS OF JAPAN vol. 017, no. 659 (C-1137), 7 December 1993 (1993-12-07) & JP 05 212241 A (MITSUBISHI HEAVY IND LTD), 24 August 1993 (1993-08-24) cited in the application
- AL-DEGS Y ET AL: "Sorption of lead ions on diatomite and manganese oxides modified diatomite" WATER RESEARCH, PERGAMON PRESS, OXFORD, GB, vol. 35, no. 15, October 2001 (2001-10), pages 3724-3728, XP004302997 ISSN: 0043-1354
- "Kirk -Othmer Encyclopedia of Chemical Technology, Third edition , Volume 7, Alloys to Distillation" 1978, WILEY &SONS , US, NEW YORK , XP002349201 page 603 - page 614

## Description

BACKGROUND

1. Field

This invention relates to a method of separating mercury from fluids which incorporates a method of making a mercury adsorbent composition. This invention describes a mercury adsorbent formed of a natural diatomite for use in separating mercury from one of an aqueous solution, an oil solution and an organic solution, a method of separating mercury from one of a aqueous solution, an oil and an organic solution using surface treated diatoms and a method of making a mercury adsorbent composition comprising a natural diatomite in the form of siliceous frustules of wherein the diatoms have the surfaces thereof treated with an activating material capable of removing mercury by chemical bonding forming surface treated diatoms which when brought into contact with a mercury containing fluid react with mercury to cause mercury species defining the mercury to separate from the fluid by chemical bonding to the surface treated diatoms.

2. Description of the Prior Art

It is known in the art to use composite articles to concentrate or remove mercury from gases and fluids. For example, United States Patent 3,961,031 discloses a method for removal of mercury contained in sulfur dioxide-containing gas by contacting the sulfur dioxide-containing gas with an aqueous thiourea solution which optionally contains an acid at an acid concentration higher than one normal to selectively absorb mercury in a vapor state.

A method for manufacturing a mercury free sulfuric acid using a contact process including scrubbing the gas to precipitate and remove heavy metals, particularly mercury, contained in the sulfuric acid is disclosed in United States Patent 4,057,423.

Composite articles for use in separating mercury from fluids and a method for using composite articles wherein the composite articles comprise an inert substrate having finely divided gold optionally in combination with a tin attaching to adsorb elemental, ionic or organic mercury in fluids is disclosed in United States Patents 5,558,771 and 5,492,627.

US 3745206 A relates to processes for the removal and recovery of soluble platinum catalysts from liquids comprising the use of a carrier having thiol or thioether functional silicone attached to the surface of the carrier.

GB 1503315 A relates to the removal of heavy metals and transition metals other than platinum from solution.

WO 01/62870 A1 relates to the removal of mercury from crude oils and other liquid hydrocarbons using sulfur-containing organic and/or inorganic compounds which are supported on carrier solids including diatomite.

US 5814226 A relates to chemically active ceramic compositions and their use for removing metal ions from aqueous waste streams.

A mercury removal agent and manufacturing method of same is disclosed in Japanese Kokai Patent Application No. Hei 5 [1993]-212241. The disclosure in Japanese Kokai Patent Application No. Hei 5[1993]-212241 is of an agent for removing mercury in combustion flue gas wherein the agent is in a slurry or semidry form and is prepared by: (a) a reaction between an inorganic powder having a large specific areas and a silane coupling agent having $\gamma$-mercapto groups at its terminals, or (b) a reaction between diatomaceous earth or a mixture of diatomaceous earth and perlite having a large specific area and a silane coupling agent having $\gamma$-mercapto groups at its terminals..

Japanese Kokai Patent Application No. Hei 5[1993]-212241, water was added to an inorganic powder of silicon dioxide, titanium dioxide, activated clay, silica gel, molecular sieve, diatomaceous earth and a mixture of diatomaceous earth and perlite. The mixture was agitated, and the agitated mixture was allowed to react with a solution of a $\gamma$-mercapto silane-coupling agent in alcohol to obtain the agent for removing mercury in a waste combustion gas.

Other known commercial mercury removal technologies include activated carbon adsorption, sulfur-impregnated activated carbon, microemulsion liquid membranes, ion exchange and colloid precipitate. The. slow kinetics, poor selectivity for mercury and low mercury loading capacity of these technologies make the mercury removal process less efficient and expensive due to the high cost of disposing large volume of waste.

Environmental remedial applications for trapping heavy metals, including mercury, are known in the art but have not been' sufficiently developed to be used for commercial applications. The dominant mercury removal adsorbent is activated carbon. However, none of the known. environmental remedial applications and agents used therefor utilize natural diatomite and an activating material which is used to activate the diatoms surface for efficiently removing heavy metal, e.g. mercury and gold, from heavy metal containing fluids, e.g. gas and liquid.

The most established market for mercury removal is in hydrocarbon process applications. The agents used for the mercury removal include catalyst materials and treated granular activated carbon. Such process technology requires performance at a large scale in order to be commercially successful. However, certain niche applications, such as, for example, offshore natural gas and gas liquids processing .have a commercial need for a mercury adsorbent composition having a high mercury loading capacity and a fast mercury removal rate.

Surface treated synthetic mesoporous silica materials have been studied as adsorbents to remove mercury. For example, a mercury adsorbent prepared by co-condensation of tetraethylorthosilicate (TEOS) and 3-mercaptopropyltrimethoxysilane is described in an article entitled One-Step Synthesis of High Capacity Mesoporous Hg$^{2+}$ Adsorbents by Non-ionic Surfactant Assembly, Pages 41 through 48, Brown, J; Richer R and Mercier, L; Microporous and Mesoporus Materials, 2000 (the "Brown et al Reference").

Thiol functional groups were attached to a mesoporous silica through condensation of tris (methoxy)mercaptopropysilane (TMMPS) as described in United States Patent 6,326,326 wherein the inventors were Feng, Liu and Fryxelld.

Although high mercury loading capacity is reported in these materials, the cost to synthesize these mesoporous silica materials is significantly higher compared to the naturally available porous silica such as diatomite. The complicated process to attach thiol functional groups to the synthetic mesoporous silica materials also adds further cost to the total production cost of making such mercury adsorbent products. A simpler process is used to produce the high efficiency mercury adsorbent product of the present invention.

Efforts were made to use silica-based minerals to remove mercury. For example, diatomite from Northern Morocco was used to treat aqueous mercury solutions in an article entitled "A New Adsorbent for the Efficient Elimination of Heavy Metals from Industrial Dismissal of Tetouan Area", Mazouak A and Azami, A, Pages 1 through 6, Volume 4, International Journal of Environmental Studies, 2001 (the "Mazouak Reference). Since no functional Hg removal group is attached to the diatomite surface, the treated waste product is not chemically stable due to the weak attraction between absorbed mercury and diatomite.

A pressing need exists for a new, novel and unique mercury adsorbent composition material for use in mercury removal from aqueous solutions, oil solutions and organic solutions containing mercury. The prior art materials and methods are inefficient from a mercury loading capacity and a mercury removal rate aspect. Further, it is highly desirable to be able to efficiently and effectively use a mercury adsorbent composition material to remove mercury when the mercury adsorbent composition material is brought into contact with a mercury containing fluid in the form of an aqueous solution, an oil solution or an organic solution containing mercury to cause mercury species defining the mercury to be separate from the fluid.

None of the known prior art compositions article and methods ' can efficiently, effectively and economically remove mercury from fluids with a high mercury loading capacity and a fast mercury removal rate.

BRIEF SUMMARY OF THE INVENTION

The present invention is defined in and by the appended claims. The present invention discloses a method of removing mercury from fluids using a mercury adsorbent composition.

The mercury adsorbent composition comprises a natural diatomite in the form of siliceous frustules of diatoms having a surface punctuated by a series of openings defining frustule structures having sizes in the range of about 0.75 μm to about 1,000 μm. The diatoms have the surfaces thereof treated with an activating material capable of removing mercury by chemical bonding forming surface treated diatoms. When the surface treated diatoms are brought into contact with a mercury containing fluid, the surface treated diatoms react with mercury to cause mercury species defining the mercury to separate from the fluid by chemical bonding to the surface activated diatoms.

The high efficiency mercury adsorbent composition and product used in the present invention is different from the known prior art. For example, the disclosure in Japanese Kokai Patent Application No. Hei 5[1993]-212241 does anticipate, disclose, suggest or teach the use of an alcohol solvent in the mercury adsorbent agent. Japanese Kokai Patent Application No. Hei 5 [1993]-212241 disclosed the use of water and water is not used in the present invention. Further, by using the teachings of the present invention, mercury removal efficiency of the present invention from an aqueous solution is significantly higher, more than two orders of magnitude higher, compared to that of the mercury adsorbent product disclosed in Japanese Patent 5212241. Further, the mercury adsorbent product disclosed in Japanese Patent 5212241 has very limited mercury removal ability in oil matrix. One reason is that the inefficient attachment of mercapto functional groups to the substrate surface at the presence of water, and alcohol solvent contributes to poor mercury removal performance.

Accordingly, one advantage of the present invention is that the mercury adsorbent composition is very effective to remove mercury from an aqueous solution, an oil solution and an organic solution.

Another advantage of the present invention is that natural diatomite is used as a substrate to make a high efficiency mercury adsorbent product.

Another advantage of the present invention is that a high efficiency mercury adsorbent composition, agent and product is made from natural diatomite having surface treated diatoms with mercury removal function, which mercury adsorbent composition, agent and product has a high mercury loading capacity, a fast mercury removal rate and a high selectivity on mercury.

Another advantage of the present invention is that a high efficiency mercury adsorbent product made from natural diatomite has a high selectivity on mercury.

Another advantage of the present invention is the disclosure and teaching of a method for preparing a high efficiency mercury adsorbent product from natural diatomite using gamma-mercaptopropyltrimethoxysilane as the mercury adsorbing functional groups.

Another advantage of the present invention is the disclosure and teaching of a method for preparing a high efficiency mercury adsorbent product from natural diatomite using non-alcohol solvent such as chloroform.

Another advantage of the present invention is that the mercury adsorbent composition may be formed of a substrate comprising a natural diatomite in the form of a siliceous frustules of diatoms having a surface punctuated by a series of openings defining frustule structures having sizes in the range of about 0.75 $\mu$m to about 1,000 $\mu$m and wherein the diatoms have the surfaces thereof treated with an activating material capable of removing mercury by binding.

Another advantage of the present invention is that a composition for separating mercury from a mercury containing fluid is disclosed wherein the composition includes a substrate including natural diatomite and a treating activating material capable of removing mercury by chemical bonding to the surfaces of the diatoms forming a substrate having surface treated diatoms.

Another advantage of the present invention is that the mercury absorbent composition can be selected to have a high mercury loading capacity.

Another advantage of the present invention is that the mercury absorbent composition can be selected to have a fast mercury removal rate.

Another advantage of the present invention is that a method of separating mercury from fluids utilizing the mercury absorbent composition is disclosed and taught by the present invention.

Another advantage of the present invention is that a method of separating mercury from fluids comprises contacting and passing a fluid containing mercury through a mercury absorbent composition is disclosed and taught of the present invention.

Another advantage of the present invention is that a method of manufacturing a mercury absorbent composition is disclosed and taught of the present invention.

Another advantage of the present invention is that a waste removal material utilizing the mercury absorbent composition is disclosed and taught of the present invention.

Another advantage of the present invention is that a mercury concentration monitoring material utilizing the mercury absorbent composition is disclosed and taught of the present invention.

Another advantage of the present invention is that a mercury removal material for use as a filter aide in a continuous filtration process utilizing, the mercury absorbent composition is disclosed and taught of the present, invention.

Another advantage of the present invention is that a mercury removal pellet material utilizing the mercury absorbent composition is disclosed and taught of the present invention.

BRIEF DESCRIPTION OF THE DRAWINGS

The present invention will become more fully understood from the following detailed description of a preferred but nonlimiting embodiment thereof, described in connection with the accompanying drawings, wherein:

Fig. 1 is a graph illustrating an adsorption isotherm for the high efficiency mercury adsorbent product made from natural diatomite wherein $Q_e$ is the adsorption density at equilibrium, $C_e$ is the concentration of adsorbate in solution (mg/L), $X_m$ is the theoretical maximum adsorption capacity (mg of solute adsorbed per g of adsorbent) which corresponded to complete monolayer coverage of Hg and K is the Langmuir constant related to energy of adsorption;
Fig. 2 is a graph depicting mercury removal performance of the high efficiency mercury adsorbent product made from natural diatomite compared with commercial available mercury removal products at high mercury starting concentration;
Fig. 3 is a graph depicting mercury removal performance of the high efficiency mercury adsorbent product made from natural diatomite compared with commercial available mercury removal products at low mercury starting concentration.
Fig. 4 is a block diagram illustrating the method for separating mercury from a fluid, e.g. gas or liquid, containing mercury using a mercury adsorbent composition of the present disclosure; and
Fig. 5 is a block diagram illustrating a process for manufacturing a mercury adsorbent composition of the present disclosure.

DETAILED DESCRIPTION OF THE INVENTION

Before proceeding with a detailed description of the invention, it would be helpful for a better understanding of the invention and in order to appreciate the significance, uniqueness and novelty of the teachings of the invention to provide a review of the background of the art, technical and social problems experienced in the field in which this invention applies and the solutions required to overcome such technical and social problems.

Background

Mercury occurs naturally in rocks, soils and crude oils, especially in regions of volcanic activity. At high concentrations mercury can have toxic effects on living organisms and becomes an environmental contaminant. Mercury exists in three different forms: elemental ($Hg^0$), inorganic (such as $Hg^{2+}$, $Hg_2^{2+}$) and organic (or organomercurial compounds such as methyl mercury) states. Organic mercury is the most toxic form, especially methyl mercury. Mercury can cause damage to kidneys, liver and intestines. If it is ingested as a vapor it can cause serious damage to the brain.

The common mercury contamination is from fossil fuel combustion; production of such chemicals as chlorine, caustic soda, cement and lime; incineration of waste and sewage sludge; mining and beneficiation operations, refining of crude oils. Contamination may be present in the air, water, sludge, sediment, and soil.

A recent United Nations report (United Nations Environmental Programme, Chemicals, Global Mercury Assessment, Pages 1 -258, UNEP Chemicals, 2002) reviewed various environmental issues related to mercury. An earlier United State EPA Mercury Study Report (United State EPA Mercury Study Report to Congress, Volume I, VI and VI, Entire Volumes and Tables, United States EPA, 1997) also addressed similar issues and assessed the impact of emissions to air of mercury from a variety of sources.

In the United States, mercury is regulated by various agencies: (a) the EPA regulates mercury in pesticides; mercury releases into the environment through air, water, and land disposal limits; (b) the FDA regulates mercury in cosmetics, food and dental products; and (c) OSHA regulates mercury air exposures in the workplace.

The known existing commercially available mercury removal technologies include: (a) activated carbon adsorption; (b) sulfur-impregnated activated carbon, (c) micro'emulsion liquid membranes; (d) ion exchange and (e) colloid precipitate. The slow kinetics, poor selectivity for mercury and low mercury loading capacity of these technologies make the mercury removal process less efficient and expensive due to the high cost of disposing of large volumes of waste.

Surface treated synthetic mesoporous silica materials have been studied as adsorbents to remove mercury. For example, a mercury adsorbent was prepared by co-condensation of tetraethylorthosilicate (TEOS) and 3-mercaptopropyltrimethoxysilane as described in the Brown Reference discussed above.

Thiol functional groups were attached to mesoporous silica through condensation of tris (methoxy) mercaptopropysilane as described in United States Patent 6,326,326 discussed above. Although high mercury loading capacity is reported in these materials, the cost to synthesize these mesoporous silica materials is significantly higher compared to the naturally available porous silica such as diatomite. The complicated process to attach thiol functional groups to the synthetic mesoporous silica materials also adds further cost to the total production cost of making such mercury adsorbent products. A simpler process is used to produce the high efficiency mercury adsorbent product for use in the present invention.

Efforts were made to use silica-based minerals to remove mercury. For example, diatomite from Northern Morocco was used to treat aqueous mercury solutions as described in the Mazouak Reference discussed above. Since no functional Hg removal group is attached to the diatomite surface, the treated waste product is not chemically stable due to the weak attraction between absorbed mercury and diatomite.

In the disclosure of Japanese Kokai Patent Application No. Hei 5[1993]-212241; the following- occurred: (a) water was added to an inorganic powder of silicon dioxide, titanium dioxide, activated clay, silica gel, molecular sieve, diatomaceous earth and a mixture of diatomaceous earth and perlite; (b) the mixture was agitated; and (c) the agitated mixture was allowed to react with a solution of a gamma-mercapto silane coupling agent in alcohol to obtain the agent for removing mercury in a waste combustion gas.

The high efficiency mercury adsorbent product of the present invention is different from the mercury-removing agent disclosed in Japanese Kokai Patent Application No. Hei 5[1993]-212241 in several aspects: (a) Non-alcohol solvent is used in the present invention; (b) Water is not used in the present invention; (c) Mercury removal efficiency of the present invention from an aqueous solution is significantly higher (more than two orders of magnitude higher compared to that of the product produced according to the Japanese Kokai Patent Application No. Hei 5[1993]) and (d) The present invention is very effective to remove mercury in oil matrix while the mercury removing agent disclosed in Japanese Kokai Patent Application No. Hei 5 [1993] - 212241 has very limited mercury removal ability in oil matrix.

In Japanese Kokai Patent Application No. Hei 5[1993]-212241, the inefficient attachment of mercapto functional groups to the substrate surface at the presence of water and alcohol solvent may contribute to the poor mercury removal performance in the disclosed mercury'removing agent.

Heavy Metal Adsorbent Composition and Mercury Adsorbent Composition

A high efficiency, heavy metal adsorbent composition and agent is taught by the present disclosure. In the preferred embodiment, a high efficiency, mercury adsorbent composition and agent is taught by the present disclosure. The composition uses a natural diatomite as the substrate. Diatomite products are obtained from diatomaceous earth (also known as kieselguhr), which is a sediment enriched in biogenic silica (i.e., silica produced or brought about by living organisms) in the form of the siliceous frustules (i.e., shells or skeletons) of diatoms. Diatoms are a diverse array of microscopic, single-celled golden brown algae of the class Bacillariophyceae, which possess an ornate siliceous skeleton (i.e., frustule) of varied and intricate structure consisting of two valves which, in the living diatom, fit together much like a pill box. The morphology of the frustules varies widely among species and serves as the basis for taxonomic classification; over at least 2,000 distinct species are known. The surface of each valve is punctuated by a series of openings that comprise the complex fine structure of the frustule and impart a design that is distinctive to individual species. The size of typical frustules ranges from 0.75 to 1,000 pm, although the majority is in the range of 10 to 150 μm. These frustules are sufficiently durable to retain much of their porous and intricate structure virtually intact through long periods of geologic time when preserved in conditions that maintain chemical equilibrium.

The fundamental chemical composition and the intricate and porous structure of the diatom frustule give diatomite unique commercial value and versatility unmatched by other natural forms of silica in, for example, filtration and filler applications. The fine particulate structure of the diatom skeleton imparts low density and high surface area, as well as high porosity and permeability.

Diatomite products may be manufactured by a variety of methods and from numerous resources, offering diversity in both physical and chemical characteristics. Example of such commercially available diatomite are: (i) Celite® 500 and (ii) Celite® NPP offered for sale and sold by World Minerals Inc., Santa Barbara, California; (iii) FN-1, (iv) FN-2 and (v) FN-6 offered for sale and sold by EaglePicher Filtration & Minerals, Inc., Reno, Nevada. In the preferred embodiment, a mercury adsorbent composition comprises a natural diatomite in the form of siliceous frustules of diatoms having a surface punctuated by a series of openings defining frustule structures having sizes in the range- of about 0.75 μm to about 1,000 μm. The diatoms have the surfaces thereof treated with an activating material capable of removing mercury by chemical bonding forming surface treated diatoms. The surface treated diatoms, when brought into contact with a mercury containing fluid, react with mercury to cause mercury to separate from the fluid by chemical bonding to the surface treated diatoms.

In the preferred embodiment, the size of the siliceous frustules of diatoms having a surface punctuated by a series of openings defining frustule structures are selected to have a majority of diatoms having a size in the range of about 10 μm to about 150 μm. It is preferred that the natural diatomite has a particle size distribution from about 5 μm (d$_{10}$, defined as that size for which 10 percent of the volume that is smaller than the indicated size) to about. 82 μm ⟨d$_{90}$, defined as that size for which 90 percent of the volume that is smaller than the indicated size).

It is preferable that the treating activating material capable of removing mercury by chemical bonding which is attached to the surfaces of the diatoms to form surface treated diatoms is selected to have at least one of a high mercury loading capacity and a fast mercury removing rate.

The high mercury loading capacity of the mercury adsorbent composition, agent or product made from.natural diatomite is greater than 400 mg Hg/g product. The fast mercury removal rate of the mercury absorbent composition, agent or product is greater than 99.9% mercury removal in. 3Q minutes from a starting ionic mercury concentration of 9700 ppb at 1 g/L product loading in aqueous solution. A high mercury loading capacity, a fast mercury removal rate, and a high selectivity on mercury results in the mercury adsorbent composition, agent and product having significant utility in mercury .removal applications.

One use of such a mercury adsorbent composition is in the field of filtration. Many known methods of particle separation from fluids employ natural diatomite products as filter aids. The intricate and porous structure unique to such diatomite products that include silica is particularly effective for the physical entrapment of particles in filtration processes. It is common practice to employ diatomite products when improving the clarity of fluids that originally contain suspended particles, particulate matter or fluids which have turbidity.

Diatomite products are often applied to a septum to improve clarity and increase flow rate in filtration processes, in a step sometimes referred to as "pre-coating". Diatomite is also often added directly to a fluid as it is being filtered to reduce the loading of undesirable particulate at the septum while maintaining a designed liquid flow rate, in a step often referred to as "body feeding". Depending on the particular separation involved, diatomite products may be used in pre-coating, body feeding, or both. The principles involved.with diatomite filtration are disclosed in an article entitled Kieselguhr Filtration: Overview of Theoretical Principles, Kiefer, J, Pages 300 through 309, Volume IV, Brauwelt International, 1991 (the "Kiefer Reference").

The intricate and porous' structure of silica unique to diatomite products also permits their commercial use for different applications. In addition to their use in paper or cellulose-bearing filter media, diatomite products are used commercially in paper processing applications, and they are essential to the processing of certain commercial catalysts. Diatomite products are also used as chromatographic supports, and are especially suited to gas-liquid chromatographic methods.

Silanol (i.e., -Si-OH)groups often occur on the diatomite surface especially on the natural diatomite surface. The concentration of the silanol groups can be controlled by hydrating or dehydrating the diatomite. When these silanol groups react with organosilanes through a series of chemical processes, the functional groups at the terminal end of the organosilanes can be attached to the surface of the diatomite to form surface treated products comprising surface treated diatoms with special functions.

The high efficient, mercury removal products for use in the present invention, and their further modifications, are useful in various mercury removal applications. As the effectiveness of diatomite in its applications is generally related to the presence of the porous and intricate structure of silica unique to diatomite in combination with surface attached gamma-mercaptopropyltrimethoxysilane functional groups, the high efficient mercury removal products for use in the present invention offer these distinguishing characteristics in greater degree than heretofore possible.

Using methods disclosed herein, commercially available natural diatomite may be used to produce the mercury removal product for use in the present invention. The products so made are superior in many applications to existing products, and the production process is economically attractive because of the relatively low cost of the feed material.

In practicing this invention, the high efficiency mercury adsorbent product made from natural diatomite may have a mercury loading capacity of at least 200 mg/g, a desired high mercury loading capacity of greater than about 300 mg/g to about 400 mg/g and a maximum high mercury loading capacity which is greater than 425 mg/g.

In practicing this invention, the high efficiency mercury adsorbent product made from natural diatomite may have a fast mercury removal rate which is greater than 99.8% mercury removal in 30 minutes from a starting ionic mercury concentration of 9700 ppb at 1g/L product loading in aqueous solution. In other applications, the high efficiency mercury product made from natural diatomite may have a fast mercury removal rate of greater than 98% mercury removal in 240 minutes from a starting ionic mercury concentration of 7800 ppb at 100 g/L product loading in vacuum oil.

A high efficiency mercury adsorbent product made from natural diatomite in accordance with the teachings of the present invention has a high selectivity on mercury.

The method of preparing the high efficiency mercury adsorbent product from natural diatomite uses gamma-mercaptopropyltrimethoxysilane as the mercury adsorbing functional groups. In another embodiment, the method of preparing the high efficiency mercury adsorbent product made from natural diatomite uses a non-alcohol solvent such as chloroform.

In the present disclosure, a mercury adsorbent product for separating mercury from a mercury containing fluid is disclosed and taught by the present disclosure. The mercury absorbent product includes a substrate comprising natural diatomite. The natural diatomite is in the form of siliceous frustules of diatoms having a surface punctuated by a series of openings defining frustule structures having sizes in the range of about 0.75$\mu$m to about 1,000$\mu$m. A treating activating material capable of removing mercury by chemical bonding is attached to the surfaces of the diatoms forming a substrate having surface treated diatoms. The surface treated diatoms, when brought into contact with a mercury containing fluid, are configured to react with mercury to cause mercury species defining the mercury to separate from the fluid by chemical bonding to the surface and are selected to have a measured ionic mercury loading capacity higher than about 200 mg Hg/g product in aqueous solution and a mercury removal greater than about 99.9% in an aqueous solution with a starting ionic mercury concentration of about 9700 ppb at 1 g/L product loading after about a 30 minutes treatment.

Method of Making a Mercury Adsorbent Composition

A high efficiency mercury adsorbent composition, agent or product using natural diatomite can be prepared by several methods.

The preferred method of preparing a high efficient mercury adsorbent composition for use in the present invention is by reacting diatomite feed material with gamma-mercaptbpropyltrimethoxy silane in the chloroform solution. The resulting mercury adsorbent composition, agent or product has a high efficient mercury removal characteristic.

The natural diatomite feed material may be the feed for regular commercially available diatomite products such as (i) Celite® 500 and (ii) Celite® NPP offered for sale and sold by World Minerals Inc., Santa Barbara, California; (iii) FN-1, (iv) FN-2 and (v) FN-6 offered for sale and sold by EaglePicher Filtration & Minerals, Inc., Reno, Nevada. Another example of such a diatomite material is a material commercially available under the trademark Celite® and includes fixed bed media products such as C408, available from World Mineral, Inc., Lompoc, California.

The method of making the mercury adsorbent composition may include the step of increasing the amount of surface silanol groups. This step is accomplished by hydrating the diatomite feed material. The diatomite feed material' may be hydrated by mixing the diatomite feed material with 5 to 20% DI water in a lab mixer

The commercially available gamma-mercaptopropyltrimethoxy silane such as gilquest® A-189 (GE Silicones - OSi Specialties, Endicott, New York, USA) may be used to react with natural diatomite. Non-alcohol solvent, such as chloroform, is preferred as solvent for the reaction.

One process for manufacturing a mercury adsorbent composition includes the step of forming a substrate of a natural diatomite in the form of siliceous frustules of diatoms having a surface punctuated by a series of openings defining frustule structures having sizes in the range of about 0.75 $\mu$m to about ' 1,000 $\mu$m; and treating the surfaces of the diatoms with an activating material capable of removing mercury by chemical bonding forming surface treated diatoms which when brought into contact with a mercury containing fluid react with mercury to cause mercury species defining the mercury to separate from the fluid by chemical bonding to the surface treated diatoms.

In such a process, the diatomite feed material is reacted with appropriate amounts of gamma-mercaptopropyltrimethoxy silane and chloroform. For example, a typical chemical to diatomite ratios (weight) include: gamma-mercaptopropyltrimethoxy silane to diatomite ratio from 0.1 to 1 and chloroform to diatomite ratio from 1 to 2. The reaction takes place in a sealed chemical resistant vessel such as glass, Teflon or stainless steel vessel with sufficient agitation at room temperature for 24 hours to 96 hours. After separation from liquid through filtering the mixture, the solid is then air dried and dispersed.

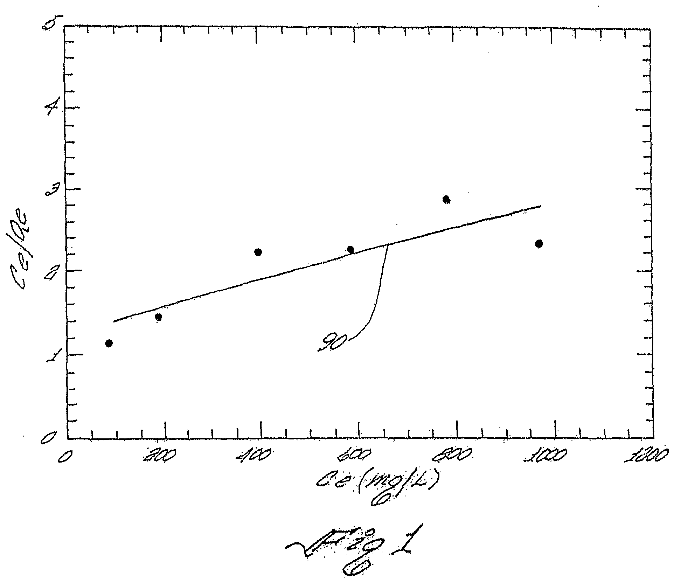

Fig. 1 depicts the adsorption isotherm for a mercury absorbent composition made from natural diatomite using the teachings of the present invention. The chart plots $C_e$ which represents solution concentration in mg/L over $Q_e$ which represents the adsorption density in mg of adsorbate per g of absorbent plotted as a function of $C_e$ in mg/L. In plotting the graph of Fig. 1, $X_m$ was the theoretical maximum adsorption capacity (mg of solute adsorbed per g of adsorbent) which corresponds to a complete monolayer coverage of Hg. K was the Langmuir constant related to energy of adsorption. The graph shows as the concentration of adsorbate in solution, in mg/L, the ratio of $C_e$ divided by $Q_e$ increases in a generally linear rate as depicted by line 90. In preparing the graph of Fig. 1, the constants y and R have the values shown on the chart of Fig. 1.

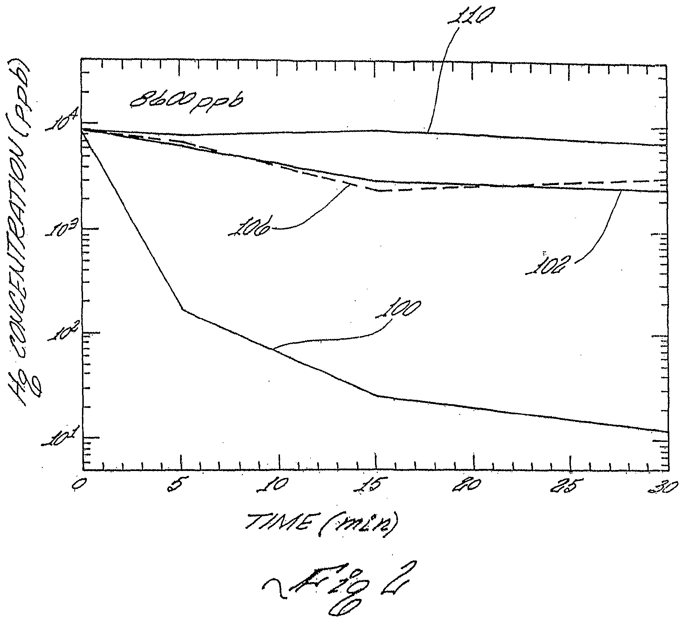

In Fig. 2, a graph is shown which represents the mercury removal performance of a mercury absorbent composition made from natural diatomite using the teachings of the present invention compared with commercially available mercury removal products. The chart plots mercury concentration, in ppb, as a function of time, in minutes. The starting mercury concentration is 8600 ppb. The mercury absorbent composition illustrated by line 100 was prepared in accordance with Example 4 below. Line 100 depicts at times zero a mercury concentration in the order of about $10^4$. At a lapse time of about 30 minutes the mercury concentration is reduced to about $10^1$. Line 102 depicts the mercury concentration for Forager® Sponge, but shows that the mercury concentration after about 30 minutes decreases below $10^4$ but remains above $10^3$. Line 106 depicts the mercury concentration for Duolite GT-73, but shows that the mercury concentration after about 30 minutes decreases below but shows that the mercury concentration after decreases $10^4$ but remains above $10^3$. Line 110 depicts the mercury concentration for HGR® 4X10, but shows that the mercury concentration after about 30 minutes decreases only slightly below $10^4$

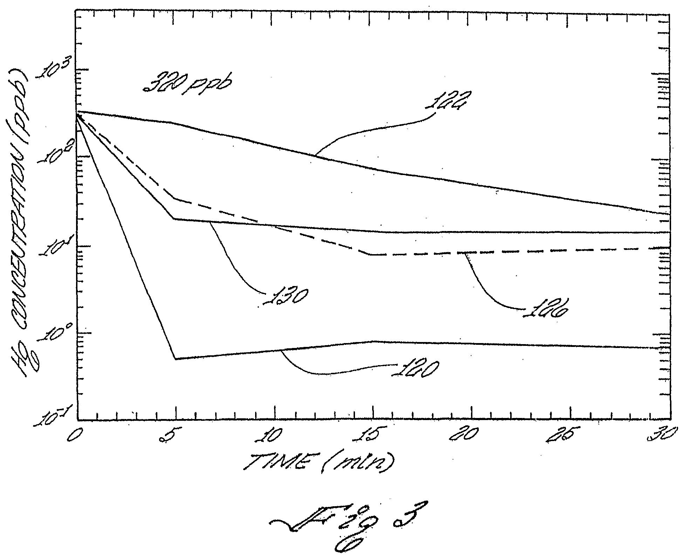

In Fig. 3, a graph is shown which represents the mercury removal performance of a mercury absorbent composition made from natural diatomite using the teachings of the present invention compared with commercially available mercury removal products starting with a lower mercury starting composition than the composition illustrated by Fig. 2. The chart plots mercury concentration, in ppb, as a function of time, in minutes. The starting mercury concentration is 320 ppb. The, mercury absorbent composition illustrated by line 120 was prepared in accordance with Example 4 below. Line 120 depicts at times zero a mercury concentration between about $10^2$ to about $10^3$. At a lapse time of about 30 minutes the mercury concentration is reduced to about 10°. Line 122 depicts the mercury concentration for forager sponge, but shows that the mercury concentration after about 30 minutes decreases below $10^2$ but remains above $10^1$. Line 126 depicts the mercury concentration for Duolite GT-73, but shows that the mercury concentration after about 30 minutes decreases below $10^2$ but remains above $10^1$. Line 130 depicts the mercury concentration for HGR 4X10, but shows that the mercury concentration after about 30 minutes decreases below $10^2$ but remains above $10^1$.

Method of Separating Mercury From Fluids

The mercury absorbent composition, agent or product of the present invention can be used in a method for separating mercury from fluids.

The method of separating mercury from fluids includes the step of contacting and passing a fluid containing mercury through a natural diatomite in the form of siliceous frustules of diatoms having a surface punctuated by a series of openings defining frustule structures having sizes in the range of about $0.75\mu m$ to about $1,000\mu m$ wherein the diatoms have the surfaces thereof treated with an activating material capable of removing mercury by chemical bonding forming surface treated diatoms, which diatoms upon contact with a mercury containing fluid react with mercury to cause mercury species defining the mercury to separate from the fluid by chemical bonding to the surface treated diatoms.

The fluid containing mercury may have the mercury which is covalently bonded. In the alternative, the fluid containing mercury may have the species which are in the form of ionic mercury. It is known in the art that it is possible to convert covalently bonded mercury to ionic mercury and to convert elemental mercury to ionic mercury.

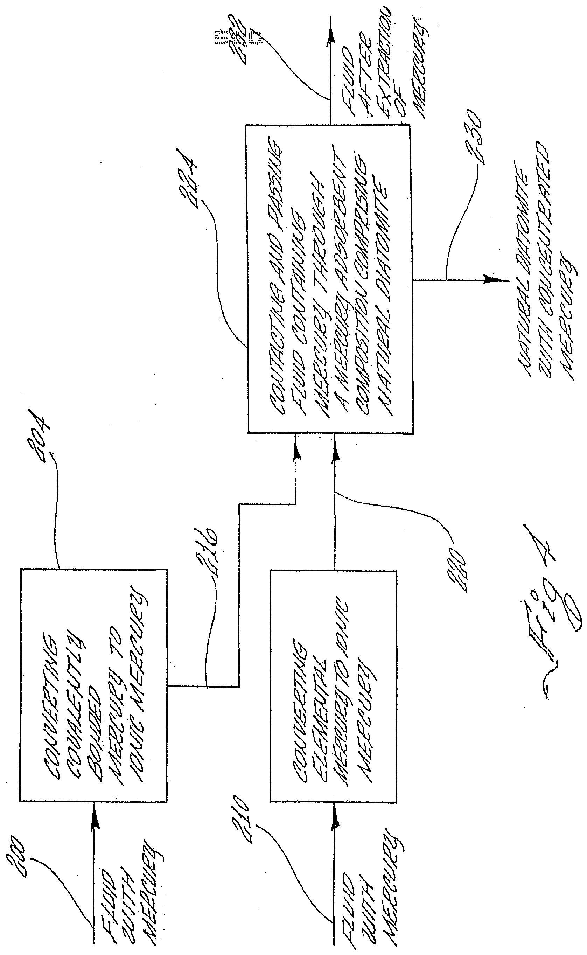

Fig. 4 is a blocked diagram that represents the method of separating mercury from fluids, wherein the mercury could be either covalently bonded mercury or ionic mercury.

In Fig. 4, fluid with mercury which is covalently bonded is depicted by arrow 200 and the covalently bonded mercury can be converted to ionic mercury as depicted by box 204. Fluid with mercury which is ionic mercury is depicted by arrow 210. Elemental mercury can be converted to ionic mercury as depicted by box 214. Covalently bonded mercury converted to ionic mercury as depicted by box 204, as depicted by arrow 216, from elemental mercury into ionic mercury and the fluid containing ionic mercury depicted by arrow 216 is then separately applied through a mercury absorbent composition comprising natural diatomite by contacting and passing the fluid there through as depicted by box 224.

The fluid containing ionic mercury, depicted by arrow 220, is then applied through a mercury absorbent composition comprising natural diatomite by contacting and passing the fluid there through as depicted by box 224. The mercury contact the diatoms having surface thereof treated with an activating material capable of removing mercury by chemical- bonding- where upon the surface treated diatoms contact the mercury containing fluid and react with the mercury to cause the mercury to separate from the fluid by molecular bonding to the surface treated diatoms. The natural diatomite with the concentrated mercury which is separated by the fluid which is depicted by the arrow 230. The fluid after extraction of mercury is depicted by arrow 232.

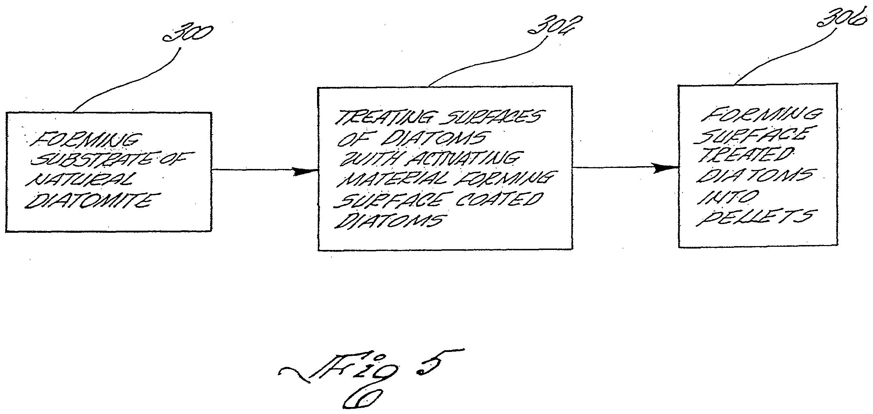

Fig. 5 depicts in the form of a block diagram a process, for manufacturing a mercury absorbent composition of the present invention. The method includes a step of preparing a substrate of natural diatomite as depicted by box 300. The substrate is formed of natural diatomite in the form of siliceous frustules of diatoms having a surface punctuated by a series of openings defining frustule structures having sizes in the range of about 0.75 $\mu$m to about 1,000 $\mu$m. The next step comprises a step of treating the surfaces of the diatoms with an activating material capable of removing mercury by chemical bonding forming surface treated diatoms which when brought into contact with a mercury containing fluid react with mercury to cause mercury species defining the mercury to separate from the fluid by binding to the surface activated, diatoms as depicted by box 302. If desired, the surface activated diatoms can be formed into, pellets as depicted by the step illustrated by box 306.

The step of attaching the activating materials may include mixing the natural diatomite with an activating material comprising gamma-mercaptopropyltrimethoxysilane.

The step of activation process includes mixing the natural diatomite with an activating material comprising gamma-mercaptopropyltrimetoxysilane in a non-alcohol solvent.

The step of activation process may include mixing the natural diatomite with an activating material comprising gamma-mercaptopropyltrimethoxysilane in a non-alcohol solvent of chloroform.

During the manufacturing process it may be desirable to hydrate the natural diatomite. Thus, the process of manufacturing the mercury absorbent composition may include the step of hydrating the natural diatomite containing silanol to increase surface silanol groups.

It may be desirable to form the natural diatomite comprising surface activated diatoms into pellets. Thus, the manufacturing process may include the step of forming the natural diatomite comprising surface activated diatoms into pellets.

Preparation of an Aqueous Solution and an Aqueous and oil Solution For Testing Mercury Removal Rate

Using Metal Adsorbent Composition.

The following examples relate to preparations of liquid in the form of solution containing mercury that can be removed using the mercury adsorbent composition of the present invention.

Aqueous Solution and Aqueous and Oil Solution Containing Ionic and Organic Mercury

An aqueous solution containing ionic mercury can be prepared by dissolving appropriate amount of mercury chloride ($HgCl_2$) in the DI water. An aqueous and oil solution containing ionic mercury can be prepared by spiking 1,000,000 $\mu$g/L or ppb (parts per billion) mercury Atomic Absorption (AA). Standard solution into the DI water or vacuum oil.

The aqueous and oil solution containing elemental mercury can be prepared by shaking elemental mercury in the DI water or Vacuum oil for several days. The remaining solid elemental mercury is then separated from the solution.

The aqueous solution containing organic mercury can be prepared by dissolving an appropriate amount of thimerosal ($C_9H_9HgNaO_2S$) in the DI water.

Actual mercury waste solutions from wet scrubbers are also used to evaluate the performance of the high efficiency mercury adsorbent product made from natural diatomite.

Determination of Mercury Concentration

inductively Coupled Plasma (ICP) is used to determine the mercury concentration in aqueous solutions or aqueous and oil solutions where the mercury concentration is higher than 100, 000 ppb (parts per billion). When the mercury concentration is between 100,000 ppb and 0.2 ppb, Cold Vapor Atomic Absorption (CVAA) is used to determine the mercury concentration. Cold vapor atomic fluorescence spectrometry (CVAFS) equipped with BRIII mercury analyzed is used to determine the mercury concentration below 0.2 ppb.

Method of Separating Mercury from Fluids

The mercury adsorbent composition made from natural diatomite can be used in a manner analogous to the currently available mercury removal compositions, agent and products; except that the mercury removal efficiency of the mercury adsorbent composition of the present invention is much more efficient than the known currently available mercury removal compositions, agent and products.

The mercury adsorbent product for use in the present invention exhibits a high mercury loading capacity fast kinetics and high selectivity and, therefore, these characteristics are particularly attractive and highly desired for use in the mercury removal applications in various industries.

Examples of applications for a high efficiency mercury adsorbent composition made from natural diatomite include:

(a) mercury control in the chemical production process to protect equipment, catalysts and systems;

(b) production process to meet a finished product specification; mercury emissions control in waste treatment process for such industries as coal and oil fired utility power plant boilers;

(c) medical, municipal and hazardous waste incinerators;

(d) chloro-alkali production plants;

(f) mercury removal in the environmental remediation process such as mercury contaminated soils and liquids;

(g) removal of mercury in the water treatment systems contaminated by dental amalgams;

(h) treatment of mercury contaminated radioactive liquid waste at US DOE facilities;

(i) a continuous mercury emission-monitoring device with a reactive trap filter media to trap mercury in various forms.

The aforementioned applications describe the utility of a mercury adsorbent composition, agent or product made from natural diatomite to form surface treated diatoms having a mercury adsorbent activating material or other appropriate treating activating material, and the use of the same for any mercury removal application including removal of mercury from a liquid, is envisioned to be within the teachings and scope of the present invention..

Standard Process for Determining Mercury Removal Rate

Mercury Removal Performance Test by Batch Process

A batch adsorption process is used to determine the heavy metal, e.g. mercury, loading capacity and to study the mercury removal kinetics. A desired amount of the high efficiency mercury adsorbent product made from natural diatomite is mixed with 50 to 100 ml of mercury solution with certain concentration. The mixing time ranges from few minutes for the kinetics study to 24 hours for the loading capacity study. After reaction, the solution is filtered and the filtrate is collected for mercury concentration measurement.

Mercury Removal Performance Test by Continuous Process

A pressure filtration process can be used to remove mercury using the high efficiency mercury adsorbent product made from natural diatomite. The high efficiency mercury adsorbent product made from natural diatomite can be applied to a septum in a step sometimes referred to as "pre-coating". The high efficiency mercury adsorbent product made from natural diatomite is also often added directly to a fluid as it is being filtered to remove mercury and reduce the loading of undesirable particulate at the septum while maintaining a designed liquid flow rate, in a step often referred to as "body feeding". Depending on the particular separation involved, the high efficient mercury removal made from natural diatomite may be used in pre-coating, body feeding, or both.

A conventional column filtration process can also be used to remove mercury. By passing the mercury containing solution through a column packed with pellets, of the high efficiency mercury adsorbent product made from natural diatomite, the mercury concentration can be reduced. Multiple columns may be used depending on the starting mercury concentration and the desired mercury discharging concentration.

EXAMPLES

The high efficiency mercury adsorbent composition, agent or products for use in the present invention and methods for use and preparation are described in the following examples which are offered by way of illustration and not by way of limitation. Tests to determine the mercury removal efficiency were carried out according to the methods described above

Example 1

A natural diatomite product was used as the feed material to prepare the high efficiency mercury adsorbent product. This feed material had a particle size distribution (PSD) from 5 $\mu$m ($d_{10}$, defined as that size for which 10 percent of the volume that is smaller than the indicated size) to 82 $\mu$m ($d_{90}$, defined as that size for which 9.0 percent of the volume that is smaller than the indicated size) To increase the surface silanol groups, 100 g of this material was hydrated by spraying 20 g of DI water in a mixer. 12.5 g of the hydrated feed material was mixed with 12.5 g of Silquest® A-189 gamma-mercaptopropyltrimethoxy silane, 225 ml of chloroform in a 500 ml glass flask covered with watch glass. After mixing for 4 days at room temperature on a magnetic stirrer, the slurry was washed with 62.5 ml of chloroform and filtered through a Buchner funnel with a #2 Whatman filter paper. The separated solid was placed in a glass tray and was air-dried overnight.

Example 2

A mercury adsorption isotherm test was carried out to study mercury-loading capacity. Aqueous solutions containing 93, 137, 404, 591,788, and 980 mg/L ionic mercury, were prepared from $HgCl_2$ and DI water 10 mg of the product of Example 1 was mixed with 50 ml of the mercury containing solution in a 100 ml glass flask sealed, with wrapping film. After mixing for 24 hours at room temperature on a magnetic stirrer, the solution was filtered through a 0.45-micron pcre size filter. The filtrate was collected for mercury concentration measurement using the inductively Coupled Plasma (ICP) . The mercury loading capacity was calculated based on the difference of mercury concentration before and after adsorption. The highest mercury loading capacity was thus calculated to be 4.28 mg Hg /g adsorbent at 980 ppm.

The Langmuir adsorption was used to fit the isotherm data (Casey, 1997):

$$Q_e = X_m K C_e / (1 + K C_e)$$

where:

$Q_e$ was the adsorption density at equilibrium solute concentration

$C_e$ (mg of adsorbate per g of absorbent) .

$C_e$ was the concentration of adsorbate in solution (mq/L)

$X_m$ was the theoretical maximum adsorption capacity (mg of solute adsorbed per g of adsorbent) which corresponded to complete monolayer coverage of Hg.

K was the Langmuir constant related to energy of adsorption.

The equation could be rearranged to the linear form:

$$C_e / Q_e = 1 / (X_m K) + C_e / X_m$$

$X_m$ could be Calculated from fitted slope in the plot of $C_e/Q_e$ vs $C_e$ as displayed in the figure 1. The theoretical maximum adsorption capacity $X_m$ thus calculated was 638. mg Hg/g of adsorbent for this product.

Example 3

A mercury removal performance test was carried out on the product of Example 1. 100 mg of the product of Example 1 was mixed with 100 ml of an aqueous solution containing 9700 ppb ionic mercury prepared from Atomic Absorption (AA) Standard solution. After mixing for 30 minutes at room temperature on a magnetic stirrer, the solution was filtered through a 0.45-micron pore size filter The filtrate was collected for mercury concentration measurement using the Cold Vapor Atomic Absorption (CVAA) . The final mercury concentration was measured to be 7.4 ppb, i.e., more than 99.9% mercury removal was achieved in 30 minutes at 1 g/L loading.

Example 4

Example 1 was repeated, except that 100 g of as prepared diatomite feed without hydration, 50 g of Silquest® A-189 gamma-mercaptopropyltrimethoxy silane, 1800 ml of chloroform were, used 500 ml of chloroform was also used for washing during the filtration

Example 5

Mercury removal kinetics tests were carried out to compare the performance of the high efficient mercury removal products of present invention with commercial available mercury removal products. 100 mg of product of Example 4 was mixed with 100 ml of aqueous solution containing 8600 ppb ionic mercury prepared from Atomic Absorption (AA) Standard Solution.. After mixing on a magnetic stirrer for 5, 15 or 30 minutes, the solution was filtered through a Buchner funnel with a #2 Whatman filter paper. The filtrate was collected for mercury concentration measurement using the Gold Vapor Atomic Absorption (CVAA) Same procedures were repeated for the commercial available mercury removal products: sulfur impregnated activated carbon HGR® (Calgon, Pittsburgh, Pennsylvania), ion-exchange resin Duolite® GT-73 (Rohm and Haas-, Philadelphia, Pennsylvania), polymer based Forager® Sponge (Dynaphore, Richmond, Virginia). The results shown in Figure 2 indicated that the high efficient mercury removal products of present Invention reduced mercury concentration from 8600 ppb to 12ppb (99.9% removal) in 30 minutes. None of the Commercial, available mercury removal products could reduce the mercury concentration to below 2000 ppb at same condition, i.e., the reduction of mercury concentration by the high efficient mercury removal products of present invention was at least two orders of magnitude, higher compared to these commercial available mercury removal products after 30 minutes of treatment.

Similar tests were carried out using an aqueous solution containing lower mercury concentration of 320 ppb (Figure 3) . The high efficient mercury removal products of present invention reduced mercury concentration from 320 ppb to 0.7 ppb (99.8.% removal) in 30 minutes. None of the commercial available mercury removal products could reduce the mercury concentration to below 10 ppb, i.e., the reduction of mercury concentration by the high efficient mercury removal products of present invention was at least one order of magnitude higher compared to these commercial available mercury removal products after 30 minutes of treatment.

Example 6

Example 4 was repeated, except that 100 g of Silquest® A-189 gamma-mercaptopropyltrimethoxy silane was used. An adsorption test was carried out to remove ionic mercury in the oil matrix. 5 g of the product was mixed with 50 ml of vacuum oil containing. 7800 ppb ionic mercury. After mixing on a magnetic stirrer for 240 minutes, the solution was filtered through a Buchher funnel with a #2 Whatman filter paper. The filtrate was collected for mercury concentration measurement using the Cold Vapor Atomic Absorption (CVAA). The final mercury concentration was measured to be below the instrumental detection limit (100 ppb) after treatment (>98.7% removal).

Example 7

An adsorption test was carried out to remove elemental mercury in aqueous solution 100 mg of the product of Example 6 was mixed with 100 ml of aqueous solution containing 90 ppb elemental mercury. After mixing for 30 minutes at room temperature on a magnetic stirrer, the solution was filtered through a 0.45-micron pore size filter. The filtrate was collected, for mercury concentration measurement using the Inductively Coupled Plasma (ICP). The final mercury concentration was measured to be 1.7 ppb after treatment (>98% mercury removal).

Example 8

An adsorption test was carried out to remove elemental mercury in oil solution. Mercury removal test in Example 6 was repeated except that a vacuum oil solution containing 566 ppb elemental mercury was used as the mercury solution. The final mercury concentration was measured to be 61 ppb after treatment (>89.2% mercury removal).

Example 9

An adsorption test was carried out to remove organic mercury in the aqueous solution. Example 7 was repeated except that a 100 ml of aqueous solution containing 11000 ppb organic mercury ($C_9H_9HgNaO_2S$) was used as the mercury solution. The final mercury concentration was measured to be 1900 ppb after treatment (about 82.7% mercury removal)

Example 10 (for comparison)

Example 3 was repeated, except that the adsorbent used was' prepared following the procedures described in the Japanese Kokai Patent Application No Hei 5[1993]-212241. The final mercury concentration after treatment was measured to be 1900 ppb. This is more than two orders of magnitude higher than the high efficiency mercury adsorbent product in Example .3. The inefficient attachment of mercapto functional groups to the substrate surface at the presencie of water and alcohol solvent may contribute to the poor mercury removal performance.

Example 11 (for comparison)

Adsorption test in example 6 was repeated, except that the adsorbent used was prepared following the procedures described in the Japanese Kokai Patent Application No Hei 5 [1993]-212241. The final mercury concentration aftertreatment was measured to be 7500 ppb. This is more than one order of magnitude higher than the high efficiency mercury adsorbent product in Example 6. The inefficient attachment of mercapto functional groups to the substrate surface at the presence of water and Alcohol solvent may contribute to the poor mercury removal performance

Example 12

An experiment was carried out to demonstrate mercury removal performance at acidic condition. An aqueous solution containing 11000 ppb ionic mercury prepared from Atomic Absorption (AA) Standard Solution was mixed with 2.5 g of HCl. The pH of the solution was Measured to be 0. 1.5 g of the product of Example 6 was mixed with 50 ml of this solution. After mixing on a magnetic stirrer for 15 minutes, the solution was filtered through a Buchner funnel with a #2 Whatman filter paper. The filtrate was collected for mercury concentration measurement using the Cold Vapor Atomic Absorption (CVAA) . The final, mercury concentration after reaction was measured to be 3.4 ppb (>99.9% removal) .

Example 13

An experiment was carried out to demonstrate mercury removal performance at basic condition. Example 12 was repeated except that an aqueous solution containing 11000 ppb ionic mercury was mixed with 0.1 g of NaOH and 1g of $Na_2SO_3$ to have a pH value of 11.2. The final mercury concentration after treatment was measured to be 2.2 ppb (>99.9% removal).

Example 14

To reduce the cost, waste solution containing Silquest® A-189 gamma-mercaptopropyltrimethoxy silane and chloroform can be recycled. Example 4 was repeated except that 1800 ml of the recycled filtrate from Example 4 was used as the attaching solution.

Example 15

Experiments were carried out to study the product stability at an accelerated oxidizing condition 100 g of the product of Example 14 was placed in a sealed glass container filled with oxygen gas for 30 days. Mercury removal test was conducted using the same procedures in Example 12 except that no HCl was added. The final mercury concentration after reaction was measured to be 2.2 ppb. Same procedures were repeated for the non-oxygen treated product and the final mercury concentration after reaction was measured to be 1.0 ppb.

Example 16

An experiment was carried out to study mercury removal performance at high temperature. 1.5 g of the product of Example 6 was mixed with 50 ml of an aqueous solution containing 10000 ppb ionic mercury prepared from Atomic Absorption (AA) Standard Solution. After mixing on a magnetic stirrer for 15 minutes at 63 to 71°C, the solution was filtered through a Buchner funnel with a #2 Whatman filter paper. The filtrate was collected for mercury Concentration measurement using the Cold Vapor Atomic Absorption. (CVAA) . The final mercury concentration after reaction was measured to be 0.6 ppb (99.99% removal).

Example 17

An experiment was carried out to study the high temperature stability of the product. 5 g of the product of Example 14 was heat-treated at 200°C for 15 minutes. 1.5 g of the heat-treated product was then mixed with 50 ml of an aqueous solution containing 10000 ppb ionic mercury prepared from Atomic Absorption (AA) Standard Solution. After mixing on a magnetic stirrer for 15 minutes, the solution was filtered through a Buchner funnel with a #2 Whatman filter paper. The filtrate was collected for mercury concentration measurement using the Cold Vapor Atomic Absorption (CVAA). The final mercury concentration after reaction was measured to be 0.6 ppb (99.99% removal).

Example 18

An experiment was carried out to demonstrate mercury removal from actual mercury waste solution using the product of present invention. A wet scrubber solution, supplied by onyx Environmental (labeled as "Absorber") was used as the mercury source solution. The mercury concentration in this sample was 220 ppb measured by Cold Vapor Atomic Absorption (CVAA). 1.5 g of the product of Example G was mixed with 50 ml of the "Absorber" solution for 15 minutes on a magnetic stirrer. The solution was then filtered through a Buchner funnel with a #2 Whatman filter paper. The filtrate was collected for mercury concentration measurement using the Cold Vapor Atomic Absorption (CVAA). No mercury was detected at the detection limit of the instrument of 0.2 ppb (>99.9% removal).

Example 19

Example 18 was repeated, except that 0.125 g of the absorbent was mixed with 500 ml of the "Absorber" solution for 120 minutes. The final mercury concentration after treatment was measured to be 1.6 ppb (99.2% removal).

Example 20

A laboratory pressure filtration experiment was carried out using a Walton Filter (World Minerals Inc., Santa Barbara, California) to remove mercury continuously using the product of present invention. 1.5 g of Celite® Hyflo was used as the pre-coat. 4 g of the product of Example 15 was used as the body-feed to mix with 4000 ml of an aqueous solution containing 8100 ppb ionic mercury prepared from Atomic Absorption (AA) Standard Solution on a magnetic stirrer as. After completion of pre-attaching process, the solution containing ionic mercury and the body feed was introduced to the Walton filter at a flow rate of 100 ml/min. The discharge solution from the Walton. Filter was then collected for mercury concentration measurement using the Cold Vapor Atomic Absorption (qVAA). The results showed that the mercury concentration was reduced to 260 ppb in about 5 minutes filtration (96.8% removal). The mercury concentration continuously decreased to 190 ppb after 20 minutes of filtration (97.7% removal).

Example 21

A commercial available fix bed media product Celite® 408 made from natural diatomite and clay was used as the feed material. 28 g of Celite® 408 was mixed with 500 ml of recycled filtrate from Example 4 in a 500 ml glass flask. Six flasks were used simultaneously for each batch of attaching reaction. After mixing on a shaker at 206 rpm for 4 days at room temperature on, the solution was washed with 800 ml of chloroform and filtered through a Buchner funnel with a #2 Whatman- filter paper. The separated solid was placed in glass tray and was air-dried overnight. This procedure was repeated several times to make enough products for testing.

Example 22

About 210 g of the product of Example 21 was packed in to a 33.02 cm (13 inch) long plastic column with 3.81 cm (1.5 inch) diameter. Four sudh columns were connected in series for the testing. An aqueous solution containing 570 ppb ionic mercury prepared from. Atomic Absorption. (AA) Standard Solution was pumped into the columns at a flow rate of 100 ml/min. The discharge solution was collected at the end of the columns for mercury using the Cold Vapor Atomic Absorption (CVAA). The results showed that the mercury concentration was reduced to 68 ppb after initial 12 minutes filtration (88.1% removal). After 42 minutes of filtration, the mercury concentration in the discharge solution was further reduced to 48 ppb (91.6% removal).

It is envisioned that the mercury adsorbent composition, agent or product disclosed and taught herein call be used In a variety of process applications which include, without limitation, in the following applications: (i) process markets wherein removal of mercury is desired to protect equipment, catalyst and systems or to meet a finished product specification; (ii) waste treatment applications wherein existing and present governmental regulations required removal of heavy medals including mercury as part of a waste treatment process including equipment, system and compositions which would comprise mercury detection as part of a continuous remissions monitoring program; and (iii) environmental remediation processes including underground water contamination processing and sewer and wastewater discharge, fluid processing in industrial applications.

The mercury adsorbent composition for use in the present invention comprises a natural diatomite in the form of diatoms having sizes in the range of about 0.75 $\mu$m to about 1,000 $\mu$m. The diatoms have, the surfaces thereof treated with an activating material capable of removing mercury by molecular bonding to form surface treated diatoms. When the surface treated diatoms are brought into contact with a mercury containing fluid, the surface treated diatoms react with mercury to cause mercury to separate from the fluid by molecular bonding to the surface treated diatoms.

## Claims

1. A method of separating mercury from fluids comprises the steps of: contacting and passing a fluid containing mercury through a natural diatomite in the form of siliceous frustules of diatoms having a surface punctuated by a series of openings defining frustule structures having sizes in the range of 0.75 $\mu$m to 1,000 $\mu$m wherein said diatoms have the surfaces thereof treated with an activating material capable of removing mercury by chemical bonding forming surface treated diatoms which upon contact with a mercury containing fluid react with mercury to cause mercury to separate from the fluid by chemical bonding to the surface treated diatoms, wherein the fluid is a liquid in the form of a solution and wherein the activating material is selected to be a gamma-mercaptopropyltrimethoxysilane as a mercury absorbing functional group, further wherein the treated natural diatomite is manufactured comprising the steps of forming a substrate of the natural diatomite in the form of siliceous frustules of diatoms having a surface punctuated by a series of openings defining frustule structures having sizes in the range of 0.75 $\mu$m to 1,000 $\mu$m; treating the surfaces of the diatoms with the activating material, and wherein the step of treating includes mixing the natural diatomite with the treating activating material comprising gamma-mercaptopropyltrimethoxysilane in a non-alcohol solvent excluding water.

2. The method of claim 1 further comprising the step of converting elemental mercury to ionic mercury prior to the step of contacting and passing.

3. The method of claim 1 further comprising the step of converting covalently bonded mercury to ionic mercury prior to the step of contacting and passing.

4. The method according to any one of claims 1 to 3, wherein the fluid is selected from an aqueous solution, an oil solution and an organic solution.

5. The method of claim 1 wherein the step of treating includes mixing the natural diatomite with a treating activating material comprising gamma-mercaptopropyltrimethoxysilane in a non-alcohol solvent of chloroform.

6. The method of claim 1 wherein the step of treating uses a natural diatomite containing silanol and further comprising the step of hydrating the natural diatomite containing silanol to increase surface silanol groups.

7. The method of claim 1 further comprising the step of forming the natural diatomite comprising surface treated diatoms into pellets.

## Patentansprüche

1. Verfahren zum Absondern von Quecksilber aus Flüssigkeiten umfasst folgende Schritte: eine quecksilberhaltige Flüssigkeit mit natürlichem Kieselgur in Kontakt bringen und es durch dieses hindurchleiten, wobei das Kieselgur als kieselsäurehaltige aus Kieselalgen gebildete Frusteln vorliegt, wobei die Oberfläche der Kieselalgen durch eine Reihe von die Frustelstrukturen definierenden Öffnungen unterbrochen wird, wobei die Größen der Öffnungen im Bereich von 0,75 $\mu$m bis 1000 $\mu$m liegen, wobei die Oberflächen der Kieselalgen mit einem aktivierenden Material behandelt werden, welches Quecksilber durch chemische Bindung entfernen kann und somit oberflächenbehandelte Kieselalgen gebildet werden, die bei Kontakt mit einer quecksilberhaltigen Flüssigkeit mit Quecksilber reagieren, wodurch sich Quecksilber durch eine chemische Bindung an die oberflächenbehandelten Kieselalgen von der Flüssigkeit ablöst, wobei die Flüssigkeit in Form einer Lösung vorliegt und wobei als aktivierendes Material ein Gamma-Mercaptopropyltrimethoxysilan gewählt wird als eine Quecksilberabsorbierende Funktionsgruppe ist und wobei ferner die Herstellung von behandeltem natürlichen Kieselgur die Schritte umfasst, ein Substrat aus natürlichem Kieselgur in Form von kieselsäurehaltigen Frusteln aus Kieselalgen mit einer Oberfläche bilden, die durch eine Reihe von die Frustelstrukturen definierenden Öffnungen unterbrochen wird, wobei die Öffnungen Größen im Bereich von 0,75 $\mu$m bis 1000 $\mu$m aufweisen, die Oberflächen der Kieselalgen mit dem aktivierenden Material behandeln, wobei der Schritt des Behandelns das Mischen von natürlichem Kieselgur mit Gamma-Mercaptopropyltrimethoxysilan in einem wasserfreien alkoholfreien Lösungsmittel umfasst.

2. Verfahren gemäß Anspruch 1, ferner den Schritt umfassend, Elementarquecksilber vor dem Schritt des Kontaktierens und Durchlassens in Ionenquecksilber umwandeln.

3. Verfahren gemäß Anspruch 1, ferner den Schritt umfassend, kovalent gebundenes Quecksilber vor dem Schritt des Kontaktierens und Durchlassens in Ionenquecksilber umwandeln.

4. Verfahren gemäß einem der Ansprüche 1 bis 3, wobei die Flüssigkeit unter einer wässrigen Lösung, einer öligen Lösung und einer organischen Lösung ausgewählt wird.

5. Verfahren gemäß Anspruch 1, wobei der Behandlungsschritt umfasst, das natürliche Kieselgur mit einer die Behandlung aktivierenden und Gamma-Mercaptopropyltrimethoxysilan enthaltenden Substanz in einem alkoholfreien Lösungsmittel aus Chloroform zu mischen.

6. Verfahren gemäß Anspruch 1, wobei der Behandlungsschritt natürliches, Silanol enthaltendes Kieselgur verwendet und weiterhin den Schritt umfasst, das natürliche, Silanol enthaltende Kieselgur zu hydratisieren, um die Oberflächen der Silanolgruppen zu vergrößern.

7. Verfahren gemäß Anspruch 1, ferner umfassend den Schritt, das natürliche, oberflächenbehandelte Kieselalgen enthaltende Kieselgur in Pellets zu formen.

**Revendications**

1. Un procédé de séparation du mercure de fluides comprenant les étapes consistant à : mettre en contact et faire passer un fluide contenant du mercure à travers une diatomite naturelle sous la forme de frustules siliceux de diatomées ayant une surface ponctuée par une série d'ouvertures définissant des structures de frustules ayant des tailles se situant dans la plage de 0,75 $\mu$m à 1 000 $\mu$m dans lequel lesdites diatomées ont leurs surfaces traitées avec un matériau activateur capable d'éliminer le mercure par liaison chimique en formant des diatomées traitées en surface qui, au contact d'un fluide contenant du mercure, réagissent avec le mercure pour amener le mercure à se séparer du fluide par liaison chimique aux diatomées traitées en surface, dans lequel le fluide est un liquide sous la forme d'une solution et dans lequel le matériau activateur est choisi pour être un gamma-mercaptopropyltriméthoxysilane comme groupe fonctionnel absorbant le mercure, et dans lequel la diatomite naturelle traitée est fabriquée comprenant les étapes consistant à former un substrat de la diatomite naturelle sous la forme de frustules siliceux de diatomées ayant une surface ponctuée par une série d'ouvertures définissant des structures de frustule ayant des tailles se situant dans la plage de 0,75 $\mu$m à 1 000 $\mu$m ; traiter les surfaces des diatomées avec le matériau activateur, et dans lequel l'étape de traitement comprend le mélange de la diatomite naturelle avec le matériau activateur de traitement comprenant du gamma-mercaptopropyltriméthoxysilane dans un solvant sans alcool à l'exclusion d'eau.

2. Le procédé selon la revendication 1 comprenant en outre l'étape de conversion du mercure élémentaire en mercure ionique avant l'étape de mise en contact et de passage.

3. Le procédé selon la revendication 1 comprenant en outre l'étape de conversion du mercure lié par covalence en mercure ionique avant l'étape de mise en contact et de passage.

4. Le procédé selon l'une quelconque des revendications 1 à 3, dans lequel le fluide est choisi parmi une solution aqueuse, une solution huileuse et une solution organique.

5. Le procédé selon la revendication 1, dans lequel l'étape de traitement comprend le mélange de la diatomite naturelle avec un matériau activateur de traitement comprenant du gamma-mercaptopropyltriméthoxysilane dans un solvant sans alcool de chloroforme.

6. Le procédé selon la revendication 1 dans lequel l'étape de traitement utilise une diatomite naturelle contenant du silanol et comprenant en outre l'étape d'hydratation de la diatomite naturelle contenant du silanol pour augmenter les groupes silanol en surface.

7. Le procédé selon la revendication 1 comprenant en outre l'étape consistant à former la diatomite naturelle comprenant des diatomées traitées en surface en granulés.

Fig 1

Fig 2

*Fig 3*

200

FLUID WITH MERCURY →

204

CONVERTING COVALENTLY BONDED MERCURY TO IONIC MERCURY

216

210

FLUID WITH MERCURY →

CONVERTING ELEMENTAL MERCURY TO IONIC MERCURY

224

CONTACTING AND PASSING FLUID CONTAINING MERCURY THROUGH A MERCURY ADSORBENT COMPOSITION COMPRISING NATURAL DIATOMITE

220

FLUID AFTER EXTRACTION OF MERCURY →

230

NATURAL DIATOMITE WITH CONCENTRATED MERCURY

Fig 4

300

FORMING
SUBSTRATE OF
NATURAL
DIATOMITE

302

TREATING SURFACES
OF DIATOMS
WITH ACTIVATING
MATERIAL FORMING
SURFACE COATED
DIATOMS

306

FORMING
SURFACE
TREATED
DIATOMS
INTO
PELLETS

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3961031 A
- US 4057423 A
- US 5558771 A
- US 5492627 A
- US 3745206 A
- GB 1503315 A
- WO 0162870 A1

- US 5814226 A
- JP HEI51993212241 B
- US 6326326 B
- JP 5212241 B
- JP HEI51993 B

**Non-patent literature cited in the description**

- **BROWN, J ; RICHER R ; MERCIER, L.** Non-ionic Surfactant Assembly. *Microporous and Mesoporus Materials,* 2000, 41-48
- **MAZOUAK A ; AZAMI, A.** A New Adsorbent for the Efficient Elimination of Heavy Metals from Industrial Dismissal of Tetouan Area. *International Journal of Environmental Studies,* 2001, vol. 4, 1-6

- United Nations Environmental Programme, Chemicals, Global Mercury Assessment. *UNEP Chemicals,* 2002, 1-258
- *United State EPA Mercury Study Report to Congress,* 1997
- **KIEFER, J.** Kieselguhr Filtration: Overview of Theoretical Principles. *Brauwelt International,* 1991, vol. IV, 300-309